# EUROPEAN PATENT APPLICATION

(11) **EP 4 495 073 A1**
(43) Date of publication of application: **22.01.2025**
(21) Application number: 23382759.1
(22) Date of filing: 21.07.2023
(51) Int. Cl.: C02F 1/461, C02F 1/469, B01D 61/42

(54) **ADVANCED ELECTRODIALYSIS SYSTEM FOR SIMULTANEOUS PRODUCTION OF ACIDIC AND ALKALINE WATER**

(71) Applicant: Sima, Marc, 07340 Alaro (ES); Licitar, Antonijo, 10000 Zagreb (HR)
(72) Inventor: Sima, Marc, 07340 Alaro (ES); Licitar, Antonijo, 10000 Zagreb (HR)
(74) Representative: Bardehle Pagenberg S.L.

(57) **Abstract**

An advanced electrodialysis system (100, 200) for the simultaneous production of acidic and alkaline water is provided. The system (100, 200) includes a first chamber (102, 202) and a second chamber (104, 204) separated by a separation unit (106, 206). A pulsating voltage applied to the first electrode (108) and the second electrode (110) causes dissociation of ions present in the water molecules in the first chamber (102, 202) and the second chamber (104, 204) allowing to produce the acidic water and the alkaline water. A monitoring unit (116, 216) continuously determines pH level of the water and an electronic control unit (120, 220) controls the pulsating voltage applied to the first electrode (108) and the second electrode (110) based on the monitored pH levels. The electrodialysis system (100, 200) is designed for efficient and adaptable production of water with varying pH levels, making it suitable for a wide range of applications.

## Description

### TECHNICAL FIELD

The present disclosure relates generally to water treatment systems, and more specifically, to an advanced electrodialysis system for the simultaneous production of acidic and alkaline water using a semipermeable membrane and a pulsating voltage.

### BACKGROUND

Water processing technology is rapidly becoming an essential aspect of modern life as contamination of water sources is occurring from a variety of activities. Water processing which encompasses desalination, concentration, and refining or purification, and the like can be achieved using an electrodialysis process, which is a combination of an electrochemical process and a dialysis diffusion process. Under the drive of an external direct voltage (or current), anions and cations respectively move to an anode and a cathode by utilizing the selective permeability of an ion exchange membrane. Different types of electrodialysis systems have different scales and characteristics in the industries.

Acidic and alkaline water produced using the electrodialysis process can be widely used for various applications. Such acidic or alkaline water produced by the electrodialysis process may also be referred to as "reprogrammed water" throughout this disclosure. Acidic water finds its best use in disinfection, cleaning surfaces, skincare, and plant care. Alkaline water is reported to offer several health benefits. The conventional electrodialysis process of producing acidic and alkaline water in chambers defined by the ion exchange membranes is however characterized by low water recovery rates, inefficient operation at elevated temperatures, and membrane fouling or scaling due to process reversal. Further, existing electrodialysis systems for creating acidic and alkaline water are inefficient to produce water with precisely defined pH levels and are generally not adaptable to various applications. The standard electrode construction of the existing electrodialysis systems is not capable of improving the performance of the reprogrammed water for handling a diverse range of industrial and residential applications.

Therefore, there is a need to address the aforementioned technical drawbacks in existing technologies. The present disclosure proves an advanced electrodialysis system for producing reprogrammed water with a desired pH level, and specifically without the need for adding any chemicals (e.g. acids like sulfuric acid or hydrochloric acid, or bases like calcium hydroxide, magnesium hydroxide or sodium hydroxide) to be used in various ways and applications.

### SUMMARY

The present disclosure provides an advanced electrodialysis system capable of simultaneously producing acidic and alkaline water in separate chambers. The system utilizes a cation-exchange membrane and an anion-exchange membrane, along with a pulsating voltage, to separate the ions of the water molecules and create water with precise pH levels. The electrodialysis system also incorporates enhancements to improve efficiency, accuracy, and adaptability for various applications.

A first aspect of the present disclosure relates to an electrodialysis system for simultaneous production of acidic and alkaline water, comprising:
a. a first chamber and a second chamber configured to receive water, wherein the first chamber and the second chamber are separated by a separation unit comprising a cation-exchange membrane and an anion-exchange membrane;
b. a first electrode and a second electrode configured to be positioned inside the first chamber and the second chamber respectively,
c. an electronic control unit (120, 220) configured to control a pulsating voltage applied to the first electrode and the second electrode such that the pulsating voltage causes a dissociation of the cations and anions present in the water molecules while the electrodialysis system is in use, allowing the cations to pass through the cation-exchange membrane into the first chamber to produce the acidic water and the anions to pass through the anion-exchange membrane into the second chamber to produce the alkaline water;
d. a monitoring unit configured to continuously determine a pH level of the water in the first chamber and the second chamber, wherein the monitoring unit optionally comprises a first pH probe to measure the pH of the water in the first chamber and a second pH probe to measure the pH of the water in the second chamber; and
e. wherein the electronic control unit is configured to control the applied pulsating voltage based on the measured pH level of the water.

In some examples, the water may comprise salts which include cations and anions, and the cations and anions of the salts may also be dissociated. However, it is not necessary that the water includes them.

A second aspect of the present disclosure provides a method for simultaneously producing acidic and alkaline water using electrodialysis, wherein the method comprises the steps of:
a. filling a first chamber and a second chamber with water, the water optionally having a neutral pH, the first chamber (102, 202) and the second chamber (104, 204) being separated by a separation unit (106, 206) comprising a cation-exchange membrane and an anion-exchange membrane;
b. optionally positioning a first electrode and a second electrode inside the first chamber and the second chamber respectively (i.e., the first electrode and the second electrode may be positioned inside the corresponding chambers if they are not arranged therein yet);
c. applying a pulsating voltage to the first electrode and the second electrode such that the pulsating voltage causes a dissociation of the water molecules into cations and anions, allowing the cations to pass through the cation-exchange membrane into the first chamber to produce the acidic water and the anions to pass through the anion-exchange membrane into the second chamber to produce the alkaline water;
d. continuously monitoring a pH level of the water in the first chamber and the second chamber with a monitoring unit;
e. controlling the applied pulsating voltage based on the monitored pH level of the water (in the first and the second chambers) by an electronic control unit; and
f. optionally extracting the acidic and alkaline water from the first chamber and the second chamber, respectively, after achieving desired pH levels.

According to these aspects, an advanced electrodialysis system and a method are provided for producing reprogrammed water, i.e. alkaline water and acidic water, by changing the pH level of the water introduced in the electrodialysis system without adding any chemicals. I.e., adding a base such as sodium hydroxide or an acid such as sulfuric acid to change the pH is avoided. The reprogramming of the water may be achieved using electrodialysis or electrodialysis reversal (EDR) process. The applied pulsating voltage may help to increase the polarity of the water, i.e. increasing the dipole moment of the water molecules. Increasing the polarity of the water molecules may promote that they separate in protons (H⁺) and hydroxides (OH⁻), and it may facilitate that they dissociate into protons and hydroxides.

The electronic control unit may promote a pulsed change of the positive and negative sides of the first and second electrodes according to a certain frequency and a duty cycle of the applied pulsed voltage. The electronic control unit may be configured to change the polarity of the electrodes from positive to negative during operation of the electrodialysis system. In this regard, the first and second electrodes act as the plates of a capacitor.

As explained further below, the electronic control unit may further comprise an inductor. The electronic control unit may be or may comprise a frequency generator. The inductor may be comprised in the frequency generator in some examples. The first and second electrodes may act as the plates of a capacitor. Due to the presence of the inductor, resonance may be achieved when the pulsed voltage is applied with the resonance frequency. This may greatly enhance the electric dipole moment of the water molecules.

It should be noted that voltage and current are related, and therefore "applying a pulsed voltage" covers both selecting a voltage, e.g. the amplitude of a voltage signal, as well as selecting a current, e.g. the amplitude of a current signal. A pulsed voltage may include a pulsed DC voltage as well as an alternating (AC) voltage.

The system may electrochemically reprogram distilled, demineralized or any other kind of water, for example suitable for cleaning or disinfection. The modular electrodialysis system design of the present disclosure may be easily adapted to various applications, such as agriculture, cleaning, and personal health. The electrodialysis system may continuously deliver reprogrammed water through continuous monitoring and automated controls for various applications.

The reprogrammed water with a higher pH, i.e. the alkaline water, may be used to purify other water. For example, about 1 liter of water with a higher pH can be used for purifying about 100 liters of water. The reprogrammed water with a higher pH may be used as a disinfectant for surfaces to kill bacteria, fungi, and viruses including Covid Sars virus, influenza, etc. The reprogrammed water with lower pH, i.e. the acidic water, can be used for washing and cleaning purposes, for example in washing machines, and for cleaning machinery in the food industry without any additional chemicals/detergents. The efficiency of the electrodialysis system for producing reprogrammed water may depend on factors such as water quality, membrane type, and the applied pulsating voltage.

The reprogrammed water (acid or alkaline) produced by the electrodialysis system of the present disclosure is best suited as electrolytes for industrial applications. For example, in a battery industry, additional ingredients, e.g. chemicals used in the prior art to produce the reprogrammed water, could cause problems in the battery chemistry or parasitic loads/parasitic reactions inside the battery/supercapacitors. This may also occur in other applications that benefit from using an ionic liquid that has a good enough electrical conductivity to support the corresponding application. Such an application may include transporting ions/electrons or even materials from anode to cathode or vice versa depending e.g. on a specific battery design and the battery chemistry and working principles.

In some embodiments, the electrodialysis system includes two or more chambers to receive the water to be reprogrammed, and the separation unit connects the two or more chambers to allow ions to be transferred between them. Through the cation-exchange membrane and the anion-exchange membrane, the ions of the salts may travel from one chamber to another chamber, thereby reducing the ion quantity in one chamber and increasing the ion quantity in the other chamber.

Optionally, the first electrode and the second electrode comprise, e.g. are made of, a stainless steel material. In these or other examples, the first and the second electrodes may be coated with an electrically conductive material. The electrically conductive material may be a nanomaterial. The electrically conductive material may comprise, e.g. may be, nanocarbon, carbon, activated carbon, a carbon fiber material, a sponge-based carbon material, a porous activated carbon material, copper, silver or gold.

The electrically conductive material(s) of the coating may be released into the water when the pulsating voltage is applied for the dissociation of the water molecules. Different nanomaterials, e.g. nanoparticles, may be dispersed in the water according to the desired use case and the water may thus for example feature antiviral and antibacterial properties. The disinfecting and antiseptic properties of the produced acidic or alkaline water can be enhanced with the use of the electrically conductive nanomaterial depending on the application.

Optionally, the first electrode and the second electrode are cylindrically shaped electrodes. The first and second electrodes may have other shapes in other examples. For instance, the first electrode and the second electrode may be flat or spherical.

Optionally, the first electrode is an inner cylinder and the second electrode is an outer cylinder surrounding the inner cylinder. The inner cylinder and the outer cylinder may be provided with holes. In general, the first electrode and the second electrode may be provided with holes. Providing holes may increase the electrode surface on which chemical reactions can take place. In the examples where the first electrode is an inner cylinder and the second electrode is an outer cylinder, the holes may help to provide suitable dynamics for the transference of cations and anions between the chambers.

Optionally, the electrodialysis system comprises a plurality of first electrodes and a plurality of second electrodes. In this manner, the surface area for the dissociation of the ions of the salts present in the water may be increased.

The plurality of first electrodes and the plurality of second electrodes may be made of the same material or of different materials..

Optionally, the cation-exchange membrane and the anion-exchange membrane comprise, e.g. are made of, a biological material comprising musk protein or plant cellulose. In some examples, the cation-exchange membrane and the anion-exchange membrane may comprise, e.g. be made of, seaweed. Seaweed is in general a renewable resource that may be sustainably cultivated. No fresh water or arable land is required for its cultivation. In addition, cultivation of seaweed may help to sequestrate carbon and help mitigating the impact of climate change. Furthermore, materials derived from seaweed are biodegradable and environmentally friendly.

As seaweed comprises for example iodine, seaweed or seaweed-derived materials may be used as efficient and cost-effective catalysts in the production of hydrogen (H₂) through electrolysis. Seaweed or seaweed-derived materials may also be useful in membranes for fuel cells. Fuel cells are devices configured to convert the chemical energy of a fuel, such as hydrogen, into electrical energy. A membrane in a fuel cell separates the hydrogen and the oxygen gases while allowing the passage of ions. Seaweed comprises polysaccharides such as alginate and carrageenan, which may help to create durable membranes with a high proton conductivity. These polysaccharides can therefore be extracted from seaweed and processed to provide membranes for fuel cells.

Optionally, the cation-exchange membrane and the anion-exchange membrane comprise, e.g. are made of, synthetic polymers. These membranes may be durable and stable.

Optionally, the electrodialysis system further comprises one or more compressors. Gas, such as air or oxygen, may be introduced into the first chamber and the second chamber to facilitate water purification. For example, a first compressor may be provided to introduce a gas in the first chamber, and a second compressor may be provided to introduce a gas in the second chamber.

Adding different gases to the water may cause a different behavior of the prepared reprogrammed water. For example, oxygen which has been dissolved in water may be a good "cleaning" agent. The introduction of oxygen into water may bring about significant benefits, including improved cleaning capabilities, disinfection, taste and odor control, corrosion control, and enhanced properties for specific applications such as aquaculture and wastewater treatment. By introducing the oxygen, the process of achieving acid reprogrammed water may be increased or accelerated, and due to the presence of oxygen such water may also have better cleaning capabilities.

The gas may be carbon monoxide, carbon dioxide or hydrogen, depending on the usage. Hydrogen may be introduced for producing hydrogenated alkaline drinking water. The hydrogen may be introduced externally. It may be introduced e.g. using under the counter hydrogenation water preparation units.

Optionally, the water introduced into the first chamber and the second chamber has a neutral pH.

The electrodialysis system may further comprise an inductor, for example one or more coils, configured to be electrically connected to the first electrode and to the second electrode. The electronic control unit may further be configured to apply a pulsating voltage for causing resonance in a resonant circuit including the inductor and a capacitor formed by the first electrode and the second electrode. As previously indicated, the first and second electrodes may thus act as the plates of a capacitor, and a pulsating voltage may be applied to them. The inductor may be comprised in the frequency generator.

When the water in each chamber achieves a desired pH, the applied voltage may no longer be pulsating such that the pH of the water in each chamber is maintained at the desired level.

### DEFINITIONS

The term "electrodialysis" refers to a membrane-based process involving the transport of ions (cations and anions) through semipermeable membranes applying a voltage. Throughout this disclosure, a pulsating voltage, rather than a DC voltage (non-pulsating voltage) is used.

The term "frequency generator" refers to an apparatus configured to generate a signal of a known oscillating voltage (or amperage) over a range of frequencies. A frequency generator may also be referred to as "power converter".

The term "ion-exchange membrane" refers to a semi-permeable membrane that transports certain dissolved ions, namely cations and anions of dissociated water molecules, and optionally cations and anions of dissociated salts which may be present in the water in some examples.

The term "electrodialysis reversal (EDR)" refers to reversing the polarity of the applied electrical potential in certain time intervals, which generally results in the removal of charged particles that have been precipitated on the membranes.

Acidic water may be understood as water in which there is an excess of hydrogen ions (H⁺) over hydroxide ions (OH⁻). Alkaline water may be understood as water in which there is an excess of hydroxide ions over hydrogen ions. Neutral water may be understood as water in which the concentration of hydrogen ions and hydroxide ions is the same. Herein, water having a neutral pH refers to neutral water. At 25 °C, neutral water has a pH of 7.

### BRIEF DESCRIPTION OF THE FIGURES

The disclosure will be better understood, and objects other than those set forth above will become apparent, when consideration is given to the following detailed description thereof. Such description refers to the annexed non-limiting figures, wherein:
**FIG. 1** is a schematic illustration of an electrodialysis system for simultaneous production of acidic and alkaline water according to an embodiment of the present disclosure.
**FIG. 2** is a schematic illustration of an electrodialysis system with a plurality of electrodes for simultaneous production of acidic and alkaline water according to another embodiment of the present disclosure.
**FIG. 3A and 3B** illustrate cylindrical-shaped electrodes which can be used as the electrodes of the electrodialysis system of FIG.1 according to an embodiment of the present disclosure.
**FIG. 4** illustrates a electrodialysis system comprising cylindrical electrodes according to another embodiment

### DETAILED DESCRIPTION OF EXAMPLES

The description set forth below in connection with the appended figures is intended as a description of presently preferred embodiments of the disclosure and is not intended to represent the only forms in which the present disclosure can be constructed and/or utilized. The description sets forth the functions and the sequence of steps for constructing and operating the disclosure in connection with the illustrated embodiments. It is to be understood, however, that the same or equivalent functions and sequences can be accomplished by different embodiments that are also intended to be encompassed within the scope of this disclosure.

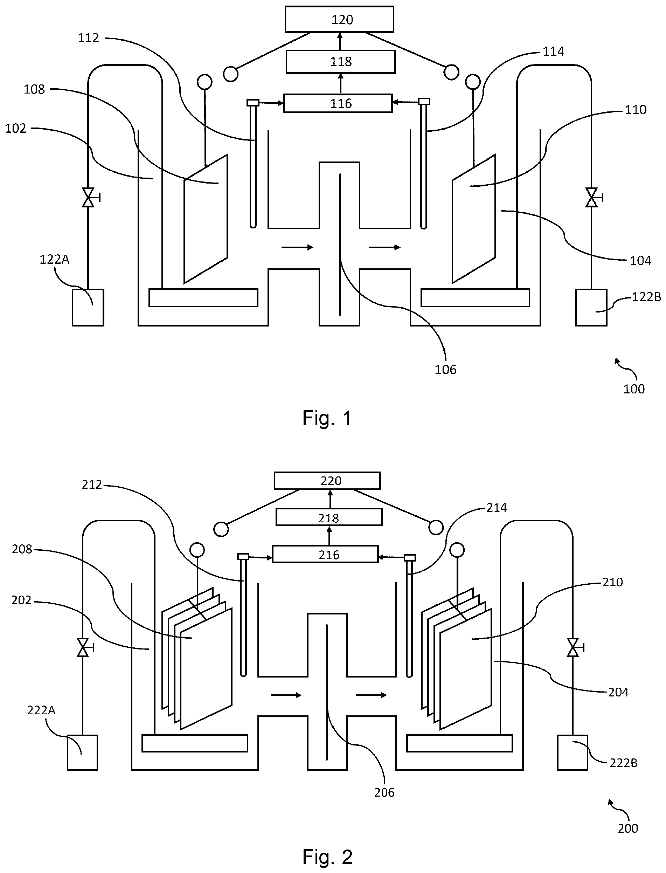

**FIG. 1** is a schematic illustration of an electrodialysis system **100** for simultaneous production of acidic and alkaline water according to an embodiment of the present disclosure. The acidic water may comprise a pH below 7 (at 25 °C). The alkaline water may comprise a pH above 7 (at 25 °C). The electrodialysis system **100** includes a first chamber **102** and a second chamber **104** configured to receive the water to be processed. The water may be of average pH (neutral) and may optionally contain (dissolved) salts, which include cations and anions. The water molecules also comprise cations (H⁺) and anions (OH⁻). A salt may e.g. be magnesium carbonate or calcium carbonate. The water may be demineralized water.

The first chamber **102** and the second chamber **104** are separated by a separation unit **106** comprising a cation-exchange membrane and an anion-exchange membrane. Herein, the separation unit separates the first and second chambers because it does not enable the water molecules to travel between the chambers. Only the cations and anions may travel through the separation unit between chambers.

A first electrode **108** is positioned inside the first chamber **102** and a second electrode **110** is positioned inside the second chamber **104.** An electronic control unit **120** is configured to control a pulsating voltage applied to the first electrode and to the second electrode such that the pulsating voltage causes a dissociation of the water molecules into cations (H⁺) and anions (OH⁻), allowing the cations to pass through the cation-exchange membrane into the first chamber **102** to produce the acidic water and the anions to pass through the anion-exchange membrane into the second chamber **104** to produce the alkaline water.

In particular, the applied pulsating voltage may cause the water molecules to separate into protons (H⁺) and hydroxides (OH⁻) when the water molecules react with electrons (e-) on the surface of the first and second electrodes. The protons may travel through the cation-exchange membrane to the first chamber, and the hydroxides may travel through the anion-exchange membrane to the second chamber. The pH of the first chamber is therefore decreased and the water therein is more acidic, and the pH of the second chamber is therefore increased and the water therein is more alkaline.

If salts are present in the water, the salts may dissociate such that the cations of the salts (e.g. Ca²⁺) join with the hydroxides in the second chamber, and the anions of the salts (e.g. CO₃²⁻) join with the protons in the first chamber. The cations of the salt may travel from the second chamber to the first chamber through the cation-exchange membrane, and the anions of the salt may travel from the first chamber to the second chamber through the anion-exchange membrane. The pH of the first chamber is therefore decreased, and the pH of the second chamber is therefore increased.

The characteristics of the pulsating voltage (amplitude, frequency...) may vary depending e.g. on the amount of water in the chambers, the dimensions of the electrodes and the membranes used. For example, an initial frequency may be between 120 Hz and 100 kHz. In some examples, an initial frequency between 0.5 kHz and 2 kHz may be used. For instance, a pulsed DC voltage of 3.5 V and 1.2 kHz may be applied. The current may be about 1.5 A. As the electrical conductivity of the water in the chambers changes during the water reprogramming, the voltage may need to be increased too. For instance, after one hour of reprogramming the water in the chambers, the applied voltage may reach, and even be above, 12 V. The frequency may be increased as well during the water reprogramming process.

If resonance is achieved (see below), starting from water with a pH of 7 in both chambers, the pH in the acidic chamber may have decreased to about 5, and the pH in the alkaline chamber may have deceased above 8 after 30 minutes of water reprogramming.

Besides having dissociation of water molecules in H⁺ and OH⁺, "usual" electrolysis of water may also occur. In the anode and the cathode, the following chemical reactions may occur, respectively: 2*H*₂0 (*l*) → *O*₂ (*g*) + 4*H*⁺(*aq*) + 4*e*⁻ in the anode, and 4*H*⁺(*aq*) + 4*e*⁻ → 2*H*₂ (*g*) in the cathode.

In some embodiments, the first electrode **108** and the second electrode **110** are coated with materials, e.g. nanomaterials, to increase the surface area for the dissociation of ions present in the water molecules. The (nano)materials may be electrically conductive. As the materials, in particular the nanomaterials, are three-dimensional (3D), the surface area may be increased.

A monitoring unit **116** is configured to continuously monitor the pH level of the water in the first chamber **102** with a first pH probe **112** and the pH level of the water in the second chamber **104** with a second pH probe **114** to maintain the pH levels within the desired range. In other examples, the pH level in each chamber may be monitored in a different manner. A control unit **118** controls the pulsating voltage applied to the first electrode **108** and the second electrode **110** for the dissociation of water ions (and therefore of salt ions) based on the measured pH level of the water obtained from the monitoring unit **116.** A power source **120** may produce a direct current (DC) voltage or a pulsating DC voltage to apply the pulsating voltage to the first electrode **108** and the second electrode **110.** The power source 120 may be included in the control unit in some examples. In other examples, the power source 120 may be provided separate from the control unit.

Two compressors **122A-B** are used in this example to create a compressed air flow within the first chamber **102** and the second chamber **104** respectively. Once the desired pH levels are achieved, the acidic and alkaline water are extracted from their respective chambers and may be used for various applications, such as cleaning, agriculture, or personal health.

**FIG. 2** is a schematic illustration of an electrodialysis system with a plurality of electrodes for simultaneous production of acidic and alkaline water according to another embodiment of the present disclosure. The electrodialysis system **200** includes a first chamber **202** and a second chamber **204** configured to receive the water to be processed. The first chamber **202** and the second chamber **204** are separated by a separation unit **206** comprising a cation-exchange membrane and an anion-exchange membrane. A plurality of first electrodes **208** is positioned inside the first chamber **202** and a plurality of second electrodes **110** is positioned inside the second chamber **204.** A pulsating voltage applied to the plurality of first electrode **208** and the plurality of second electrode **210** causes a dissociation of ions present in the water molecules, allowing cations to pass through the cation-exchange membrane into the first chamber **202** to produce the acidic water and anions to pass through the anion-exchange membrane into the second chamber **204** to produce the alkaline water.

A monitoring unit **216** is configured to continuously monitor the pH level of the water in the first chamber **202** with a first pH sensor **212** and the pH level of the water in the second chamber **204** with a second pH sensor **214.** A control unit **218** controls the pulsating voltage applied to the first electrode **208** and the second electrode **210** for the dissociation of water ions based on the measured pH level of the water obtained from the monitoring unit **216.** A power source **220** produces a pulsed DC voltage to apply the pulsed DC voltage to the first electrode **208** and the second electrode **210.** Two compressors **222A-B** are used to create a compressed air flow within the first chamber **202** and the second chamber **204** respectively.

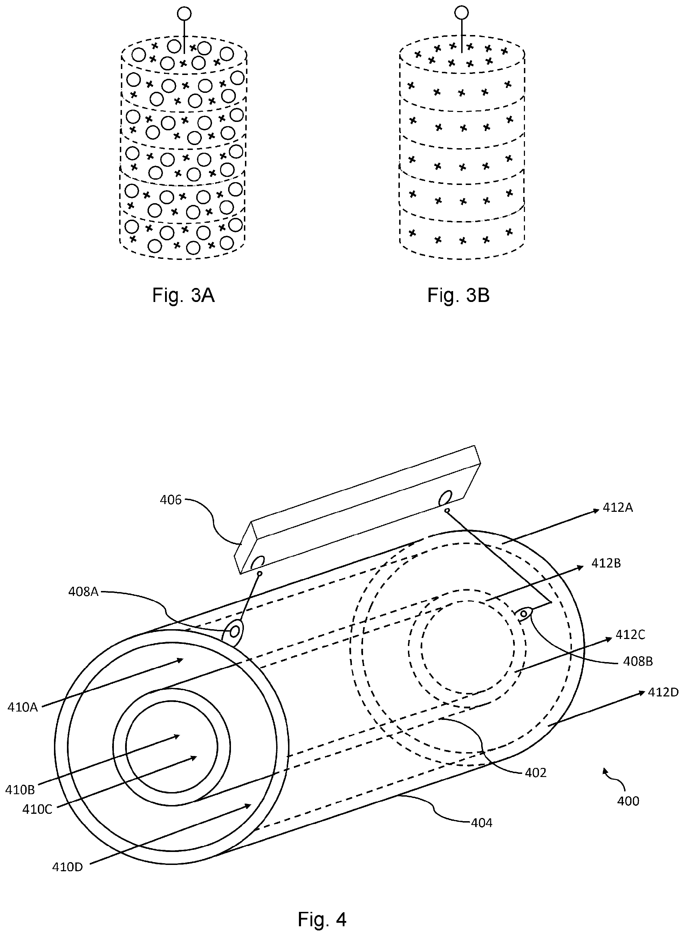

**FIG. 3A and 3B** illustrate cylindrical-shaped electrodes of the electrodialysis system of **FIG.1** according to an embodiment of the present disclosure. **FIG.3A** illustrates the cylindrical-shaped electrode with activated carbon pallets or palletized nano-activated carbon (schematically indicated as crosses in fig. 3A). A nanomaterial comprising carbon may react less, or not react, with the acidic and alkaline solutions, and may barely dissolved, or not dissolved, in the water.

**FIG.3B** illustrates a cylindrical-shaped electrode, which can be made of a stainless-steel material, with activated carbon pallets or palletized nano-activated carbon (schematically indicated as crosses in fig. 3B) to increase the active surface for the dissociation of the ions present in the water molecules. The cylindrical-shaped electrodes are provided with holes (schematically indicated as circles in fig. 3B). The holes also help to increase the electrode surface available for reactions leading to water molecules dissociating in protons and hydroxides. A suitable nanomaterial comprising carbon (or any suitable (nano)material which may help to increase the surface available for reactions) may be provided both on an outer surface of an electrode and on an inner surface of the electrode, i.e. within the holes if the electrode includes holes.

**FIG. 4** illustrates an example of an electrodialysis system including cylindrical electrodes, which can comprise or be made of stainless steel, powered by a frequency generator. The electrodialysis system **400** includes an inner cylindrical electrode **402** (first electrode), an outer cylindrical electrode **404** (second electrode), a frequency generator **406,** and connection terminals **408A-B.** The inner cylindrical electrode **402** and the outer cylindrical electrode **404** are provided with holes and include e.g. activated carbon.

The inner cylindrical electrode **402** and the outer cylindrical electrode **404** are powered by a DC pulsating current generated by the frequency generator **406.** The frequency generator comprises one or more coils which are powered with a certain frequency, in particular a resonant frequency of the circuit which includes the coils (inductor) and electrodes (capacitor). The frequency, voltage, amperage, pulse amplitude, pulse shape, and the duration of working and pause periods can be adjusted for making the electrodialysis system to resonate.

As mentioned before, the electrodes (i.e. the inner cylindrical electrode **402** and the outer cylindrical electrode **404**) play the role of capacitors connected with the inductor, creating a resonant circuit. The inductor and the electrodes may be electrically connected in series. This may allow to maximize a current circulating through the circuit at resonance.

The resonance achieved by adding an inductor to the electrodialysis system may increase the polarity (electric dipole moment) of the water molecules. By increasing the (electric) dipole moment of the water molecules over time, it may become more conductive and may help to enhance the dipole moment of the water too. This may lead to increased efficiency of the process over time, as the changes occurring in the water may contribute to the overall system efficiency.

The example of FIG. 4 represents another configuration of the electrodialysis system, in which water to be reprogrammed can be provided to two chambers. A first chamber may include a cavity between the inner wall of the inner cylinder chamber. The inner cylinder acts as first electrode. A plurality of holes opens in the inner wall of the inner cylinder. A second chamber may include a cavity formed between the outer cylinder and e.g. a wall radially surrounding the inner cylinder. In this example, the outer cylinder may reprogram the water of the first chamber and the inner cylinder may reprogram the water of the second chamber.

A separating unit comprising a cation-exchange membrane and an anion-exchange membrane may be provided, e.g. axially outside the cylinder electrodes or radially between the first and second chambers, for enabling the passage of cations and anions through them and between both chambers. **410B** and **410C** indicate the entry of the water into the cavity of the inner cylindrical electrode **402,** and **410A** and **410D** indicate the entry of the water into the cavity of the outer cylindrical electrode **404.** Water may also be introduced through axial holes in the body of the electrodes 402, 404. **412B** and **412C** indicate the exit of the water from the inner cylindrical electrode **402** and **412A** and **412D** indicate the exit of the water from the outer cylindrical electrode **404** after water polarization. The polarized water exiting the outer cylindrical electrode **404** is alkaline and the polarized water exiting the inner cylindrical electrode **402** is acidic. For example, more than 20 liters of water are obtained in each container for electrodialysis. After the polarization phase of the process, it was observed that the process occurred at almost the same speed as when using only 5 liters of water in each container, thus reducing energy consumption during the electrodialysis process.

In all the examples disclosed herein, when the water in each chamber reaches a desired pH level, the water may be removed from the corresponding chamber and stored in an airtight container.

The foregoing description is provided to enable any person skilled in the relevant art to practice the various embodiments described herein. Various modifications to these embodiments will be readily apparent to those skilled in the relevant art, and generic principles defined herein can be applied to other embodiments.

## Claims

1. An electrodialysis system (100, 200) for simultaneous production of acidic and alkaline water, comprising:
a first chamber (102, 202) and a second chamber (104, 204) configured to receive water, wherein the first chamber (102, 202) and the second chamber (104, 204) are separated by a separation unit (106, 206) comprising a cation-exchange membrane and an anion-exchange membrane;
a first electrode (108) and a second electrode (110) configured to be positioned inside the first chamber (102, 202) and the second chamber (104, 204), respectively;
an electronic control unit (120, 220) configured to control a pulsating voltage applied to the first electrode (108) and the second electrode (110) such that the pulsating voltage causes a dissociation of water molecules into cations and anions while the electrodialysis system is in use, allowing the cations to pass through the cation-exchange membrane into the first chamber (102, 202) to produce the acidic water and the anions to pass through the anion-exchange membrane into the second chamber (104, 204) to produce the alkaline water;
a monitoring unit (116, 216) configured to continuously determine a pH level of the water in the first chamber (102, 202) and the second chamber (104, 204), wherein the monitoring unit (116, 216) optionally comprises a first pH probe (112, 212) to measure the pH of the water in the first chamber (102, 202) and a second pH probe (114, 214) to measure the pH the of water in the second chamber (104, 204); and
wherein the electronic control unit (120, 220) is configured to control the applied pulsating voltage based on the measured pH level of the water.

2. The electrodialysis system (100, 200) according to claim 1, wherein the first electrode (108) and the second electrode (110) comprise, and optionally are made of, steel.

3. The electrodialysis system (100, 200) according to any of the preceding claims, wherein the first electrode (108) and the second electrode (110) are coated with an electrically conductive material.

4. The electrodialysis system (100, 200) according to claim 3, wherein the electrically conductive material comprises copper, silver or gold.

5. The electrodialysis system (100, 200) according to claim 3, wherein the electrically conductive material comprises nanocarbon, carbon, activated carbon, a carbon fiber material, a sponge-based carbon material, or a porous activated carbon material.

6. The electrodialysis system (100, 200) according to any of the preceding claims, wherein the first electrode (108) and the second electrode (110) are cylindrical shaped electrodes.

7. The electrodialysis system (100, 200) according to claim 6, wherein the first electrode (108) is an inner cylinder (402) and the second electrode (110) is an outer cylinder (404) surrounding the inner cylinder (402).

8. The electrodialysis system (100, 200) according to any of the preceding claims, wherein the first electrode (108) and the second electrode (110) are provided with holes.

9. The electrodialysis system (100, 200) according to any of the preceding claims, comprising a plurality of first electrodes (108) and a plurality of second electrodes (210).

10. The electrodialysis system (100, 200) according to any of the preceding claims, wherein the cation-exchange membrane and the anion-exchange membrane comprise, and optionally are made of, a biological material comprising musk protein or plant cellulose.

11. The electrodialysis system (100, 200) according to any of claims 1-9, wherein the cation-exchange membrane and the anion-exchange membrane comprise, and optionally are made of, synthetic polymers.

12. The electrodialysis system (100, 200) according to any of the preceding claims, further comprising a first compressor (122A, 222A) and a second compressor (122B, 222B) for introducing gas, optionally air or oxygen, into the first chamber (102, 202) and the second chamber (104, 204), respectively, to facilitate water purification.

13. The electrodialysis system (100, 200) according to any of the preceding claims, further comprising an inductor configured to be electrically connected to the first electrode (108) and to the second electrode (110), wherein the electronic control unit (120, 220) is further configured to apply a pulsating voltage for causing resonance in a resonant circuit including the inductor and a capacitor (108, 110) formed by the first electrode (108) and the second electrode (110).

14. A method of simultaneously producing acidic and alkaline water using electrodialysis, wherein the method comprises the steps of:
filling a first chamber (102, 202) and a second chamber (104, 204) with water, the first chamber (102, 202) and the second chamber (104, 204) being separated by a separation unit (106, 206) comprising a cation-exchange membrane and an anion-exchange membrane, and the water optionally having a neutral pH;
applying a pulsating voltage to the first electrode (108) and the second electrode (110) such that the pulsating voltage causes a dissociation of water molecules into cations and anions, allowing the cations to pass through the cation-exchange membrane into the first chamber (102, 202) to produce the acidic water and the anions to pass through the anion-exchange membrane into the second chamber (104, 204) to produce the alkaline water;
continuously monitoring a pH level of the water in the first chamber (102, 202) and the second chamber (104, 204) with a monitoring unit (116, 216);
controlling the applied pulsating voltage based on the monitored pH level of the water; and
optionally extracting the acidic and alkaline water from the first chamber (102, 202) and the second chamber (104, 204), respectively, after achieving desired pH levels.

15. The method according to claim 14, wherein the first electrode (108) and the second electrode (110) are coated with nanocarbon, carbon, activated carbon, a carbon fiber material, a sponge-based carbon material, a porous activated carbon material, copper, silver or gold; and
optionally wherein the coating dissolves in the water, at least in part, when the pulsating voltage is applied.
